# EUROPEAN PATENT APPLICATION

(11) **EP 1 111 722 A1**
(43) Date of publication of application: **27.06.2001**
(21) Application number: 00403612.5
(22) Date of filing: 20.12.2000
(51) Int. Cl.: H01R 12/16, G06K 7/00

(54) **Microcircuit card connector and process for installing the card in such connector**

(30) Priority: 22.12.1999 FR 9916217
(71) Applicant: F.C.I. - Framatome Connectors International, 92084 Paris La Défense Cedex (FR)
(72) Inventor: Camacho, Gabriel, 25300 Pontarlier (FR)
(74) Representative: Schmit, Christian Norbert Marie

(57) **Abstract**

A connector (1) for receiving a microcircuit card (4) such that the card is held in a seat (3) of the housing (2) of this connector by a release (20) which overhangs the seat on a first edge (19) and on the other side by a tongue (29) situated on a flexible girder on a second opposite edge (24). The tongue is situated on a flexible girder in such a manner as to allow the passage of the card beneath the tongue. Further, the girder (25) has a lever arm formed by a lug (30) preferably diametrically opposite the tongue (29), to assist girder bending.

## Description

The present invention relates to a microcircuit card connector. It also relates to a process for installing the card in this connector. More particularly, it finds use in the field of chip card connectors, especially in the field of connectors for receiving electronic minicards, for instance SIM cards. Connectors are generally designed to be installed in electronic apparatuses of small size and volume, typically in pocket apparatuses, such as portable radiotelephones. In prior art, connectors are known for receiving such microcircuit cards, such that these connectors have either bulky means for forcing a card against the contacts provided in such connector, or fragile, i.e. non reversible means for holding the card in the connector. The interest of the invention lies in that it provides a connector having a small-sized means to allow effective and reversible retention of the card in the connector.

In prior art, a connector is particularly known from the principle of document US-A-5 320 552, which has a housing that forms a seat for a microcircuit card. The housing has a cover, such that the cover is mounted on the housing by means of a joint to allow it to be opened and closed while remaining integral with the housing. When the cover is in the closed position, it is parallel to a bottom of the housing seat. The bottom of the seat has contacts which are to be pressed against conductive segments of the card to be inserted in the connector. Such connector has a major drawback, deriving from its size. The presence of a cover considerably increases connector thickness. On the other hand, the joint used by this cover is miniature-sized, hence it is fragile. Now, such connector is preferably designed for use in the field of portable telephony, wherein a constant miniaturization of the equipment is required. More particularly, a reduced thickness of phone housing is requested. Therefore, this prior art connector may cause problems due to its considerable thickness.

Moreover, this prior art connector requires much space around it when the SIM card is installed or removed, since the cover needs to be completely opened, i.e. lifted sometimes up to 90° with respect to a plane formed by the bottom of the connector seat, for a full release of the card.

Also, a prior art microcircuit card connector is known from the principle of document EP-A-0 515 897. This connector also has a housing with a card seat. On a first face of the housing, contacts are provided for contact with conductive segments of the card to be inserted in the housing. Then, the housing has borders to delimit the card seat. Particularly, the housing has a first border, such that it bas a groove to receive a first edge of the card, and the housing has a second border, opposite the first border, such that said second border has a tip. According to this document, the groove is formed on the one hand by an inwardly directed release on the first border and on the other hand by a lower resilient lever, inwardly rising so as to force the card in the seat against the release. The groove has a variable size, which is a function of the force exerted by the resilient lever. The retention of the card in this groove is only ensured by the flexible tip. The card is held at the second border between the tip and a fixed and rigid member of the housing bottom. This tongue-like tip is mounted on a flexible bar which forms the second border. Hence, the tip is flexible and may be slightly bent down. Particularly, when the card is pushed against the tongue, the tongue slightly bends to allow the passage of the card. Then, when the card abuts against the fixed and rigid element, the tongue-like tip slips along the card edge, and the stress on the flexible girder is annulled so that the tongue may reach a starting position, i.e. overhanging the seat parallel to the seat bottom.

Such other type of prior art connector also has a problem. The card-receiving structure of the housing is fragile. Particularly a resilient means is used, that is the tip. A prior art connector is designed in such a manner that the tip is joined to the border by tabs on both sides. These tabs are either thin, hence fragile, or thick and so more rigid, but also more difficult to bend. Also, if these tabs are more rigid, a considerable insertion force is to be exerted on the card to be inserted, and any improper handling thereupon may cause a deformation of the girder and/or of the card to be inserted. Then, the card is deformed, it may no longer form a perfect plane and some of its conductive segments may even no longer be in contact with the contacts located at the bottom of the housing. Further, if a too strong insertion stress is exerted, then the tabs may even rupture, which makes the connector completely useless.

Also, this connector has a second problem. The card is easily installed in the seat of such a connector, as it consists in placing the first edge of the card in a groove of a first border of the housing and then in pushing a second edge of this card beneath a resilient tip. However, when the card is retained by the groove on one side and under the resilient tip on the other side, it is very difficult to remove the card from its seat. To this end, a reverse process should be performed of releasing the second edge from the tip, and then the first edge from the groove. The difficult step is the release of the second edge from beneath the tip, due to the fact that the tip is not easily displaced. In fact, this prior art tip is pointed, the tip overhanging the card, whereby the tip has no grip point allowing withdrawal thereof by bending in a direction opposite to insertion, to remove the card from its seat. To this end, the tip should be lifted to release the second card edge. In order to do this, a thin blade might be slid between the card and the tip and lifted to draw the tip away from the card. However, this method requires high accuracy and may not be easily implemented by a user. On the other hand, it may be arranged that a stress is exerted to cause a rotation of the tabs attaching the tip to the second border, by pushing an edge of the tip being situated on an axis formed by these tabs. However, the lever arm resulting therefrom is minimal. Then a considerable stress is needed, which may involve the risk of rupturing the tip attaching tabs. Hence, this connector has the drawback of a difficult card removal.

Therefore, the present invention has the object of solving both size-related problems caused by an excessive thickness of connectors and ail problems relating to strength and handability of the resilient retention means provided on a microcircuit card housing. Hence, the invention provides a housing such that the housing has a seat delimited by borders of the housing arranged to receive the card. Preferably, these borders are arranged in such a manner as to provide a seat whose shape is complementary to the card to be inserted. A first border of this housing has a release overhanging the seat so that a height between a lower face of said release and the bottom of the seat is of the same order as the thickness of a card to be inserted. This release has a chamfered lower face so that a first edge of the card may be first introduced slantwise beneath this release.

Then, a second edge of the card is pushed beneath a flexible tip, or tongue provided on a resilient girder at a second border of the housing. To this end, this second border has a resilient girder which is independent from the bottom of the seat and has a tongue, a flat protuberance, to overhang the card introduced in the seat, said tongue being able to be displaced to allow the passage of the card in the seat. Also, this resilient girder has a second tongue, particularly shaped as a lug. The lug is preferably directed opposite the tongue. This lug has the function to provide a lever arm for bending the resilient girder. In fact, in a preferred embodiment, the tongue is provided on a median portion of the resilient girder. Further, in this example, the lug is provided opposite the tongue on a median portion of the same resilient girder. Hence, the bending stress on the resilient girder is evenly distributed on both sides of the tongue. In a preferred embodiment, an upper face of the tongue is chamfered to assist insertion of the card in the seat.

During this insertion in the seat, the tongue, as well as the girder, are slightly bent to allow the passage of the card. When the card is in position, the tongue gets back to its starting position and holds the card in the seat. When the card is placed against the bottom of the seat, it flattens out the active flexible portions of the contacts against the conductive segments of the card.

Therefore, the invention relates to a microcircuit card connector having a housing with a card seat, the housing having a bottom, borders and contacts situated on the bottom, the contacts being intended to be connected with the conductive segments of the card, characterized in that a first border of the housing has a release overhanging the seat, and such that a second border of the housing has a resilient girder provided on the one side with a tongue overhanging the seat and on the other side with a lug opposite the tongue to assist girder bending.

It also relates to a process for installing a microcircuit card in a connector, characterized in that it includes the following steps:
- placing the card in a seat of the connector, so that the card forms an oblique plane with respect to a plane formed by the seat bottom,
- displacing the card parallel to the seat bottom to place a first edge of the card against a first border and beneath a release of this first border,
- pushing down a second edge of the card, opposite the first edge,
- pushing said second edge against a chamfered tongue provided on a flexible girder in such a manner as to allow the passage of the card beneath the tongue.

The invention will be understood more clearly by reading the following description with reference to the accompanying figures. The latter are only shown by way of example and do not intend to limit the invention in any manner. The figures show:
- Figure 1: a top perspective view of a connector according to the invention;
- Figure 2: a sectional view of a connector according to the invention.

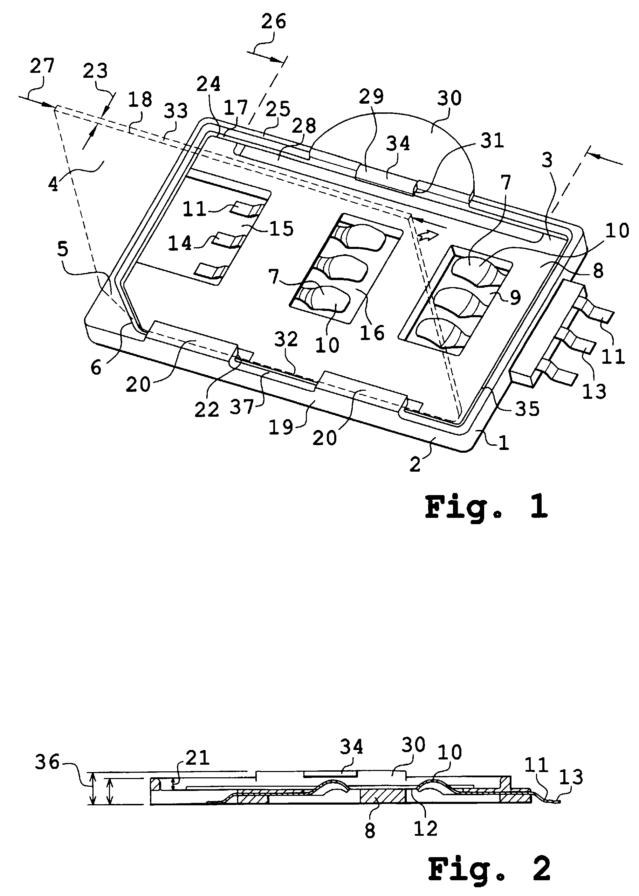

Figure 1 shows a connector 1 according to the invention. The connector 1 includes a housing 2, such that the housing 2 has a seat 3 for receiving a microcircuit card 4. The seat 3 defines a space which is complementary to a volume formed by the card 4. Since the card 4 is flat and thin, the seat has a hollow parallelepiped shape. The card 4 has a corner cut 5 which allows to know the orientation of the card 4. The corner cut 5 has a keying function, in conjunction with a complementary projection 6 of the housing 20. Therefore, the card can only be inserted in one manner in the complementary seat 3.

The card 4 is for instance a SIM card. Hence, the card 4 includes a microcircuit (not shown) whose conductive segments are to come in contact with the connector contacts. In fact, the connector 1 has contacts 7 at a bottom 8 of the housing 2. The contacts 7 appear at apertures 9 formed in the bottom 8. For instance, the contacts 7 are molded in the housing 2. Hence, for instance, the contacts 7 include an active flexible portion 10 and a welding tab 11. The active flexible portion 10 appears at the aperture 9. As shown in figure 2, in a preferred embodiment, this active portion 10 protrudes in the seat 3 beyond a plane 12 formed by the bottom 8. In this embodiment, the active portion 10 is spoon-shaped. Hence, when a card 4 is inserted in the seat 3, the active portions 10 are pressed against the card 4. In a preferred embodiment, the flexible active portions 10 are arranged in such a manner that they exactly contact the selected conductive segments of the microcircuit of the card 4.

A fastening tab 11 may be provided outside a perimeter defined by the housing 2, like the fastening tab 13. Alternatively, a fastening tab 14 like the fastening tab 11 may be provided in an aperture 15 of the bottom 8 of the seat 3. In the embodiment as shown in Figure 1, the connector 1 has six contacts like the contact 7, such that three contacts like the contact 7 have fastening tabs 13 outside the housing 2, and such that three contacts like the contact 7 have fastening tabs like the tab 14 inside the aperture 15. In this embodiment, the three first active portions like the active portion 10 are provided in the aperture 9 and the three other active portions like the active portion 10 are provided in an aperture 16.

The housing 2 has borders 17 disposed in such a manner as to define a slightly wider shape corresponding to a periphery 18 of the card 4. Hence, the seat 3 is defined by the bottom 8 and the borders 17. The housing 2 particularly includes a first border 19 such that the border 19 has a means 20 for holding a card 4 inserted in the seat 3. In a preferred embodiment, the retention means 20 corresponds to a release overhanging the seat 3. In fact, a height 21 between a lower face 22 of a release 20 and the bottom 8 is of the same order as one thickness 23 of the card 4. More generally, the height 21 is equal to or higher than the thickness 23. Hence, when the card 4 is inserted in the seat 3, a slight vertical mobility perpendicular to the plane 12 formed by the bottom 8, is allowed.

Further, the housing 2 has a second border 24, such that this border 24 has a flexible girder 25 such that a length 26 of this girder 25 is smaller than a length 27 of the card 4 but of the same order as this length 27. The flexible girder 25 is independent from the bottom 8. For example, it is obtained by forming an undercut in the bottom 8 and in the base of the border 24. In these conditions, the girder 25 is connected to the portions of the border 24 which are not undercut. Hence, a space 28 is defined between the bottom 8 and the girder 25. Thanks to the fact that the girder 25 is free, it can be slightly deformed and bent. The flexible girder 25 has on the one side a tongue 29 and on the other side a lug 30. The tongue 29 is provided in such a manner as to form a release overhanging the seat 3. On the other hand, the lug 30 is provided so that it is opposite the tongue 29, hence directed out of a periphery formed by the housing 2.

A bending force may be exerted on the girder in a preferred manner, by pushing the upper face of the lug 30. Like the releases 20, the tongue 29 has the function to relate a card 4 in position in the seat 3. Therefore, a height defined between a lower face 31 of the tongue 29 and the bottom 8 is equal to or higher than the thickness 23 of the card 4. It might be arranged that this height is equal to the height 21. Hence, a card 4 inserted in the seat 3 is perfectly retained in its seat and a slight vertical mobility of the card inside the seat is allowed. In fact, to reduce the thickness of the connector, in a preferred embodiment, the tongue 29 and the lug 30 may be provided in the same plane. Alternatively, the lug is situated in a higher plane.

In order to insert a card 4 in such a seat 3, the card is first placed. obliquely with respect to the plane 12 by placing a first edge 32 of the card 4 beneath the release 20. The release 20 also has the peculiarity that it has a chamfered lower face 22. This facilitates the oblique insertion of the card 4. In a preferred embodiment, the first edge 32 may be placed against the inner border 19. Then, a second edge 33 of the card 4 is pushed downwardly, said edge 33 being opposite the edge 32, so that the edge 33 abuts on the top 34 of the tongue 29. Also, this top 34 of the tongue 29 la chamfered. Hence, the card 4 may be progressively pushed downwards and at the same time the tongue 29 may be slightly bent, so that the whole flexible bar 25 may be bent to allow the passage of the card beneath the tongue 29. The quality of forcemated contacts is maintained.

Further, in order to generally facilitate the insertion of a card 4 in a seat like the seat 3, ail the borders 17 are chamfered at the top 35.

In order to remove a card 4 inserted in the seat 3, pressure has to be exerted on the lug 30. The lug 30 preferably has the shape of a semicircular block. The radius of this block is sufficient to provide an effective lever arm to bend the resilient girder 25. For both the tongue 29 and the lug 30, the girder 25 has on both sides free symmetrical portions of the bottom 8. These portions have each a length of the order of half the length of the lug 30, which in turn has a length of the order of half the length of the girder 25. Hence, the bending stress is exerted on these portions. Since the release of the tongue 29 is rather short, the bending force generated by pushing these releases causes an even and distributed bending action which does not cause the girder 25 to be ruptured. The portion 30 is pushed to lift the tongue 29, thereby releasing the second edge 33 and releasing the card 4 from the seat 3, performing the installation steps in the reverse direction. Typically, the projection of the lug 20 is four to five times longer than the projection of the tongue 29.

Such connector is preferably designed as having a height 36 of the order of 2.3 mm. This height 36 is considerably smaller than the height of a connector with a cover like prior art ones. In a preferred embodiment of the invention, the first border 19 has two releases like the release 20 and the second border 24 has only one tongue 29, such that the tongue 29 faces towards a space 37 separating the two releases like the release 20.

## Claims

1. A connector (1) for a microcircuit card (4) having a housing (2) with a card seat (3), the housing having a bottom (8), borders (17) and contacts (7) situated on the bottom, the contacts being intended to be connected with the conductive segments of the card, characterized in that a first border (19) of the housing has a release (20) overhanging the seat, and such that a second border (24) of the housing has a resilient girder (25) provided on the one side with a tongue (29) overhanging the seat and on the other side with a lug (30) opposite the tongue to assist girder bending.

2. A connector as claimed in claim 1, characterized in that the resilient girder is independent (28) from the bottom.

3. A connector as claimed in any claim 1 to 2 characterized in that a height (21) between the bottom and a lower face (22)of the release is equal to or higher than a thickness (23) of the card.

4. A connector as claimed in any claim 1 to 3, characterized in that a height between the bottom and a lower face (31) of the tongue is equal to or higher than a thickness of the card.

5. A connector as claimed in any claim 1 to 4, characterized in that the tongue is chamfered at its top (34) to assist girder bending.

6. A connector as claimed in any claim 1 to 5, characterized in that the lug is a semicircular block.

7. A connector as claimed in any claim 1 to 6, characterized in that the contacts have an active flexible portion (10) protruding beyond a plane (12) formed by the seat bottom, to exert a force-mating contact on the conductive segments of the card housed in the seat, said active portion having a spoonlike shape.

8. A connector as claimed in any claim 1 to 7, characterized in that the borders are chamfered (35) to assist the insertion of the card in the seat.

9. A process for installing a microcircuit card (4) in a connector (1), characterized in that it includes the following steps:
- placing the card in a seat (3) of the connector, so that the card forms an oblique plane with respect to a plane (12) formed by the seat bottom (8),
- displacing the card parallel to the seat bottom to place a first edge (32) of the card against a first border (19) and beneath a release (20) of said first border,
- pushing down a second edge (33) of the card, opposite the first edge,
- pushing said second edge against a chamfered (34) tongue (29) provided on a flexible girder (25) in such a manner as to allow the passage of the card beneath the tongue.

10. An installation process as claimed in claim 9, characterized in that, in order to remove the card
- the lug is pushed to release the tongue,
- the second edge of the card is released,
- the first edge of the card is released from beneath the release of the first border.
